# EUROPEAN PATENT SPECIFICATION

(11) **EP 4 061 612 B1**
(45) Date of publication and mention of the grant of the patent: **23.08.2023**
(21) Application number: 20820539.3
(22) Date of filing: 23.11.2020
(51) Int. Cl.: B29C 64/106, B29C 64/227, B33Y 30/00, B33Y 10/00, B29C 64/245

(54) **A SYSTEM FOR ADDITIVE MANUFACTURING OF AN OBJECT**
SYSTEM ZUR GENERATIVEN FERTIGUNG EINES GEGENSTANDES
SYSTÈME DE FABRICATION ADDITIVE D'UN OBJET

(30) Priority: 22.11.2019 BE 201905826
(43) Date of publication of application: 28.09.2022
(73) Proprietor: Govaerts Recycling, 3570 Alken (BE)
(72) Inventor: GOVAERTS, Eddy, 3570 Alken (BE)
(74) Representative: Gevers Patents
(86) International application number: PCT/IB2020/061015
(87) International publication number: WO 2021/100023

(56) References cited:
- WO-A1-2012/171644
- WO-A1-2019/141606
- US-A1- 2008 213 419
- US-A1- 2015 321 419

## Description

### Technical domain

The present invention relates to a system for additive manufacturing of an object.

### State of the art

In known systems for the additive manufacturing of objects, a plasticizer or printing head is used that is arranged for melting a plastic, for example supplied in the form of a filament or granulated material. The molten plastic material is applied onto a flat printing bed by means of a nozzle of the plasticizer for additive manufacturing of the object. Both the plasticizer and the printing bed are moveably arranged in the system. Herein, the plasticizer is moveable in directions perpendicular to a height direction, so that the plasticizer is able to apply a layer of the object onto the flat printing bed, which is arranged perpendicular to the height direction. The printing bed and/or the plasticizer is moveable in the height direction, so that they can be moved away from each other so as to apply a next layer of the object on top of the previous layer of the object already applied onto the printing bed.

Such systems have the disadvantage that they are difficult to scale up for the additive manufacturing of larger objects. This is because when scaling up, the plasticizer also becomes larger and heavier, as a larger amount of plastic material needs to be supplied and melted. The larger plasticizer is harder to move, making precise additive manufacturing of the object harder. Moving the larger plasticizer can also cause disruptions in the flow of molten plastic material from the nozzle, which may cause defects in the additively manufactured object.

Moreover, for additive manufacturing of larger objects, a larger output opening needs to be provided in the nozzle of the plasticizer, so that a larger flow of molten plastic material can be output from the nozzle. The disadvantage of the larger output opening is that the flow of molten plastic material from the nozzle is harder to apply onto the object to be additively manufactured in a controlled way. This increases the risk of flaws in the object to be additively manufactured.

Such systems further also have the disadvantage that it is not always possible to properly support all the parts of the object during their additive manufacturing. Such parts are for example parts that project perpendicular to the height direction at a certain height relative to the printing bed. In order to properly support these parts, additional supporting elements need to be provided on the object to be additively manufactured, which then need to be removed from the object again after its additive manufacturing. Among other things, this causes the additive manufacturing of the object to take more time, and furthermore also leads to a loss of material. Removing the supporting elements is also detrimental for the ability to give the additively manufactured object an aesthetically pleasing finish.

Known systems for additive manufacturing of objects also have the disadvantage that impurities in the plastic material fed to the plasticizer, for example when using recycled plastic, cause an irregular flow of molten plastic material from the nozzle, since the melting of the plastic does not occur evenly as a result of the impurities. Such an irregular flow is detrimental to the quality of the object to be additively manufactured.

Known systems for additive manufacturing of objects also have the disadvantage that they are only intended for limited scale production, and are not suitable for continuous production at an industrial scale.

Moreover, the use of filament in existing systems is a disadvantage, as additional steps are needed to arrange the plastic material to be fed in the form of filament beforehand. In addition, systems for additive manufacturing of larger objects also require the use of large diameter filament, which is harder to manipulate. US 2015/321419 discloses a system for additive manufacturing of an object, wherein the system comprises at least one plasticizer, wherein the at least one plasticizer comprises a feeder for feeding a material for additive manufacturing of the object, a first conditioner at least arranged for heating the at least one plasticizer for liquefying the fed material in such a way as to allow additive manufacturing of the object using the liquid material, a nozzle having an output opening for outputting the liquid material in a continuous flow, and a conveyor for transporting the fed material and the liquid material through the at least one plasticizer from the feeder to the nozzle, a printing bed arranged for applying the liquid material from the at least one plasticizer thereon for additive manufacturing of the object; and a first support device for supporting the printing bed, wherein the at least one plasticizer comprises a barrel for liquefying the fed material therein, wherein the barrel is connected to the feeder, wherein the first conditioner is arranged for heating the barrel for liquefying the fed material, wherein the barrel extends along a horizontal direction, wherein the conveyor is arranged for transporting the fed material and the liquid material through the barrel along the horizontal direction, wherein the nozzle comprises a main body that is connected to the barrel and that extends downward along a vertical direction, wherein the nozzle, at a bottom end of the main body, is provided with a head having the output opening.

### Description of the invention

The present invention aims to provide a system for additive manufacturing of an object that is better suited for additive manufacturing of large objects.

This aim is realized by means of a system for additive manufacturing of an object, which system exhibits the characteristics of the first independent claim.

To this end, the present invention provides a system for additive manufacturing of an object. The system comprises at least one plasticizer. The at least one plasticizer comprises a feeder for feeding a material for additive manufacturing of the object. The at least one plasticizer comprises a first conditioner. The first conditioner is at least arranged for heating the at least one plasticizer for liquefying the fed material in such a way as to allow additive manufacturing of the object using the liquid material. The at least one plasticizer comprises a nozzle having an output opening for outputting the liquid material, preferably in a continuous flow. The at least one plasticizer comprises a conveyor for transporting the fed material and the liquid material through the at least one plasticizer from the feeder to the nozzle. The system is preferably configured such that the output opening of the nozzle, at least during additive manufacturing of the object, is located in a predetermined fixed position in the system. The system comprises a printing bed arranged for applying the liquid material from the at least one plasticizer thereon for additive manufacturing of the object. Preferably, the printing bed is a flat printing bed. The system comprises a first support device. The first support device is arranged for supporting the printing bed. The first support device is arranged for moving the printing bed according to 6 degrees of freedom. Preferably, the system according to the present invention comprises a control unit that is operationally connected to the different parts of the system for controlling the different parts of the system. Preferably, the control unit is operationally connected to the at least one plasticizer for controlling the first conditioner for heating the at least one plasticizer for liquefying the fed material. Preferably, the control unit is operationally connected to the at least one plasticizer for controlling the conveyor for transporting the fed material and the liquid material through the at least one plasticizer. Preferably, the control unit is operationally connected to the first support device for controlling the first support device for supporting and moving the printing bed.

The system according to the present invention offers the advantage that additive manufacturing of an object by means of the system is mainly carried out by movements of the printing bed, which is moveable according to 6 degrees of freedom by means of the first support device. The plasticizer is therein fixed in a predetermined position in the system so that the output opening of the nozzle is always positioned at the predetermined position in the system, or the plasticizer is arranged in the system to be tiltable in such a way that the output opening of the nozzle remains positioned at the predetermined position in the system. Therefore, no movements or only limited movements of the plasticizer are needed for additive manufacturing of the object. This simplifies scaling up the system for additive manufacturing of large objects, for examples objects with a print volume up to 2 m³, as the adverse effects of moving the plasticizer no longer need to be taken into account, or to a lesser degree.

The printing bed being moveable according to 6 degrees of freedom by means of the first support device offers the advantage that during additive manufacturing of the object, the printing bed can always be positioned in such a way that the parts of the object still to be manufactured are always optimally supported by the printing bed and the part of the object already applied onto it. Thus, the object to be additively manufactured no longer needs to be provided with additional supporting elements, which saves time and reduces the loss of materials during additive manufacturing of objects. Furthermore, the omission of the additional supporting elements is also beneficial for the ability to give the additively manufactured object a neat finish, since they no longer need to be removed.

The 6 degrees of freedom for moving the printing bed are 3 independent translational degrees of freedom and 3 independent rotational degrees of freedom. If so desired, the first support device can be configured for carrying out more than 6 independently controllable movements. The first support device may for example be a robotic arm of which each joint is configured for carrying out multiple independently controllable movements that together realize the moving of the printing bed according to the 6 degrees of freedom.

The output opening being positioned at the predetermined fixed position in the system should be understood in the sense that at least one point, preferably a central point, of the output opening is positioned at the predetermined position. This means that the output opening is no longer able to be translated, but may, if so desired, be tiltable relative to the at least one point.

The material for additive manufacturing of the object may for example be a plastic, a thermoplastic material, a fiber wax, a mineral or a gel. It should, however, be understood that other materials known to the person skilled in the art may also be used that are suitable for the additive manufacturing of objects.

Preferably, the at least one plasticizer comprises a barrel for liquefying the fed material therein. The barrel is connected to the feeder. The barrel is connected to the nozzle. The first conditioner is arranged for heating the barrel for liquefying the fed material.

Preferably, the nozzle comprises a main body that is connected to the barrel. The main body extends downward along a vertical direction. At a bottom end of the main body, the nozzle is provided with a head having the output opening.

Preferably, the barrel extends along a horizontal direction. The conveyor is arranged for transporting the fed material and the liquid material through the barrel along the horizontal direction.

This is advantageous for controlling the distribution of heat in the barrel. The horizontal arrangement allows targeted heating of a zone of the barrel using the first conditioner for liquefying the fed material. Rising heat in the barrel can quickly be removed from the barrel without thereby disrupting any processes in other parts of the barrel, as would be the case in a vertical arrangement, since rising heat would then flow through higher parts of the barrel.

Preferably, the at least one plasticizer comprises at least one expansion space for accommodating the liquid material. Preferably, the main body of the nozzle comprises the expansion space, for accommodating any changes in the flow of the liquid material from the barrel.

This is advantageous to allow an even flow of the liquid material to be ejected at the output opening of the nozzle, preferably at a predetermined pressure, preferably a predetermined pressure in the range of 20-200 bar, wherein there is no sudden increase or decrease of the ejected liquid material that could cause defects in the object to be additively manufactured. This is particularly advantageous in systems for additive manufacturing of large objects, wherein large amounts of the fed material and the liquid material need to be conveyed through the at least one plasticizer, increasing the risk of fluctuations in the flow of the liquid material. This is also particularly advantageous if the fed material, such as for example recycled plastic, contains impurities, increasing the risk of fluctuations in the flow of the liquid material.

Preferably, the first conditioner is also arranged for heating the nozzle for maintaining the liquid material in a liquid state, preferably independently of the heating of the barrel. Preferably, the control unit is operationally connected to the at least one plasticizer for controlling the first conditioner for heating the nozzle for maintaining the liquid material in a liquid state.

This is advantageous to prevent the possible solidifying of the liquid material in the nozzle, which may adversely affect the quality of the object to be additively manufactured, and wherein the solidified material in the nozzle may also interfere with the process of additive manufacturing of the object.

This is also advantageous for maintaining the liquid material in the expansion space in the main body of the nozzle under controlled conditions, and thus to be able to expel an even flow of the liquid material at the output opening of the nozzle, preferably at a predetermined pressure, wherein there is no sudden increase or decrease of the ejected liquid material that could cause defects in the object to be additively manufactured.

The heating of the nozzle also contributes to the heating of the head of the nozzle, which is advantageous if the head of the nozzle is used for smearing the ejected liquid material onto the object to be additively manufactured. When used in this way, the ejected liquid material also remains liquid during the smearing, so that the smearing can occur smoothly without any hitches. This also offers the advantage that no solidified residues of the ejected liquid material can remain on the head of the nozzle that could interfere with the proper additive manufacture of the object.

The above-mentioned characteristics of the system according to the present invention, such as the expansion space in the main body of the nozzle and the first conditioner also being arranged for heating the nozzle, for controlling the flow of the liquid material, also make the system according to the present invention suitable for sustained production at an industrial scale. In such production, the risk of fluctuations in the flow of the liquid material is increased, which the system according to the present invention is able to accommodate.

In an embodiment, the present invention provides a system for additive manufacturing of an object. The system comprises at least one plasticizer. The at least one plasticizer comprises a feeder for feeding a plastic in a solid state. The at least one plasticizer comprises a first conditioner. The first conditioner is at least arranged for heating the at least one plasticizer for melting the fed plastic material. The at least one plasticizer comprises a nozzle having an output opening for outputting the molten plastic material. The at least one plasticizer comprises a conveyor for transporting the fed plastic material and the molten plastic material through the at least one plasticizer from the feeder to the nozzle. The system is preferably configured such that the output opening of the nozzle, at least during additive manufacturing of the object, is located in a predetermined fixed position in the system. The system comprises a printing bed arranged for applying the molten plastic material from the at least one plasticizer thereon for additive manufacturing of the object. Preferably, the printing bed is a flat printing bed. The system comprises a first support device. The first support device is arranged for supporting the printing bed. The first support device is arranged for moving the printing bed according to 6 degrees of freedom. Preferably, the system according to the present invention comprises a control unit that is operationally connected to the different parts of the system for controlling the different parts of the system. Preferably, the control unit is operationally connected to the at least one plasticizer for controlling the first conditioner for heating the at least one plasticizer for melting the fed plastic material. Preferably, the control unit is operationally connected to the at least one plasticizer for controlling the conveyor for transporting the fed plastic material and the molten plastic material through the at least one plasticizer. Preferably, the control unit is operationally connected to the first support device for controlling the first support device for supporting and moving the printing bed.

In an embodiment of the system according to the present invention, the volume of the expansion space is adjustable.

This embodiment offers the advantage that the expansion space can even better perform its function of accommodating any changes in the flow of the liquid material, by dynamically responding to large increases in the flow of the liquid material by increasing the volume of the expansion space, and to large decreases in the flow of the liquid material by decreasing the volume of the expansion space. In this way, a predetermined pressure of the liquid material can be sustained at the output opening of the nozzle, to thus expel an even flow of the liquid material at the output opening of the nozzle.

This embodiment also offers the advantage that, if so required by the application, the pressure of the liquid material at the output opening of the nozzle can temporarily be adjusted, for example to temporarily allow a larger or smaller amount of the liquid material to be ejected from the nozzle. This may for example be useful if, during additive manufacturing of the object, more or less of the liquid material is to be applied at certain positions in the object.

In an embodiment of the system according to the present invention, a wall of the expansion space is provided with at least one slidable wall section for adjusting the volume of the expansion space.

The inventors have found that by means of the at least one slidable wall section, the volume of the expansion space is readily adjustable. The at least one slidable wall section may for example be formed by a bimetal, a membrane, a piston or any other variable actuator in an opening in the wall of the expansion space. Preferably, the wall of the expansion space is provided with a plurality of the slidable wall sections, to allow responding to fluctuations in the flow of the liquid material at different positions in the expansion space.

In an embodiment of the system according to the present invention, the at least one slidable wall section comprises a bimetal.

In an embodiment of the system according to the present invention, the at least one plasticizer comprises a controller for controlling the adjustment of the volume of the expansion space. The controller comprises at least one pressure sensor in at least one of the barrel, the expansion space and the head of the nozzle for measuring the pressure in the liquid material. The controller is configured to adjust the volume of the expansion space, based on the pressure measured by the at least one pressure sensor, in such a way that a predetermined pressure in the liquid material is established at the output opening of the nozzle.

This embodiment is advantageous to allow an even flow of the liquid material to be ejected at the output opening of the nozzle at the predetermined pressure. Here, the pressure measured by a pressure sensor in the head of the nozzle offers the main indication of the pressure at which the liquid flow is ejected at the output opening. The pressure sensor in the head of the nozzle alone, however, does not always allow a timely response to pressure changes in the flow of the liquid material. To this end, it can also be advantageous to use upstream pressure sensors in the barrel or in the expansion space. Based on a pressure measured by one of these pressure sensors, the controller can predict a pressure at the output opening, and, based on this predicted pressure, adjust the volume of the expansion space as desired so as to achieve the predetermined pressure in the liquid material at the output opening of the nozzle. Preferably, a combination of these pressure sensors is used for improved accuracy.

In an embodiment of the system according to the present invention, the expansion space extends through the main body of the nozzle along the vertical direction as a conduit for the liquid material from a passage duct for the liquid material from the barrel to an output duct for the liquid material in the head of the nozzle. The expansion space has a larger diameter than the passage duct and the output duct.

This embodiment offers the advantage that an expansion space can be provided in the main body of the nozzle in a simple way.

In an embodiment of the system according to the present invention, the output opening of the nozzle has a diameter of at least 1 mm, preferably at least 1.5 mm, more preferably at least 2 mm, and even more preferably at least 2.5 mm, and at most 16 mm, preferably at most 14 mm, more preferably at most 12 mm, and even more preferably at most 10 mm.

This embodiment is advantageous for providing a system for additive manufacturing of large objects, as the larger output opening of the nozzle allows a larger amount of the liquid material to be expelled.

In an embodiment of the system according to the present invention, the head of the nozzle is provided at a bottom end with a smearing surface extending around the output opening.

This embodiment is advantageous if the head of the nozzle is used for smearing the ejected liquid material onto the object to be additively manufactured. This means that the liquid material can be ejected at a relatively high pressure, causing the liquid material to not only flow directly downwards out of the output opening onto the object to be additively manufactured, but also laterally between the smearing surface and the object to be additively manufactured. Preferably, the pressure of the liquid material at the output opening and the distance between the head of the nozzle and the object to be additively manufactured are mutually attuned in such a way that the ejected liquid material does not flow beyond the edges of the smearing surface. This allows a wider, yet uniform layer of the liquid material to be applied onto the object to be additively manufactured.

In an embodiment of the system according to the present invention, the smearing surface has a diameter of at least 12 mm, preferably at least 13 mm, more preferably at least 14 mm, even more preferably at least 15 mm, and most preferably at least 16 mm, and at most 38 mm, preferably at most 36 mm, more preferably at most 34 mm, even more preferably at most 32 mm, and most preferably at most 30 mm.

The inventors have found that a smearing surface of such dimensions is beneficial to be used in combination with an output opening having the diameters listed above. Thereby, for an output opening having a small diameter, a smearing surface having a correspondingly small diameter is selected, and for an output opening having a large diameter, a smearing surface having a correspondingly large diameter is selected. However, this is not strictly necessary. It is for example also possible to select a smearing surface having a larger diameter for an output opening having a small diameter, if, for example, the aim is to apply a wide, thin layer of the liquid material onto the object to be additively manufactured.

In an embodiment of the system according to the present invention, the smearing surface is a flat surface with rounded corners or a curved surface.

This embodiment is advantageous when smearing the ejected liquid material onto the object to be additively manufactured for obtaining a neat, uniform layer of the applied liquid material using the head of the nozzle, as there are no sharp corners on the smearing surface.

In an embodiment of the system according to the present invention, the first conditioner is arranged for heating the main body and the head of the nozzle independently of each other.

This embodiment offers the advantage that the heating of the main body can be specifically attuned to maintaining the liquid material under controlled conditions in the expansion space in the main body of the nozzle, and that the heating of the head of the nozzle can be specifically attuned to the use of the head when smearing the ejected liquid material onto the object to be additively manufactured.

In an embodiment of the system according to the present invention, the feeder is arranged for feeding a thermoplastic material.

In an embodiment of the system according to the present invention, the plastic is a recycled plastic.

In an embodiment of the system according to the present invention, the feeder is arranged for feeding the plastic as a granulated material, a regranulated material, a ground material and/or a densified material.

This embodiment offers the advantage that the plastic can be supplied in small, manageable pieces. This embodiment also offers the advantage that the plastic requires little preprocessing to be supplied in the desired form.

In an embodiment of the system according to the present invention, the feeder is provided with an agitator to agitate the fed plastic.

This embodiment is advantageous for preventing or eliminating congestions in the fed plastic material in the device. When using plastic in the form of a granulated material, a regranulated material, a ground material and/or a densified material as the fed material, congestions known as "bridges" can be formed in a feed opening toward the at least one plasticizer, obstructing the plastic feed. By agitating the fed plastic material by means of the agitator, the so-called "bridges" are removed, so that the plastic feed can again run smoothly. This is especially advantageous if the feeder is a hopper. The agitator may for example be a device for making the feeder vibrate, but it may also for example be a device for generating air currents in the fed plastic material in the feeder.

In an embodiment of the system according to the present invention, the conveyor is also arranged for transporting the fed material and the liquid material through the at least one plasticizer from the nozzle to the feeder.

This embodiment is advantageous for controlling the flow of the liquid material from the nozzle. By having the conveyor transport the fed material and the liquid material in the opposite direction from the nozzle to the feeder, the flow of the liquid material can be temporarily suspended. This may for example be done during additive manufacturing of the object to allow the additive manufacturing of the object to be resumed in another position relative to the printing bed without any of the liquid material flowing out of the nozzle in the meantime.

In an embodiment of the system according to the present invention, the nozzle is provided with a closing element for opening and closing the output opening. Preferably, the control unit is operationally connected to the at least one plasticizer for controlling the closing element for opening and closing the output opening of the nozzle.

This embodiment is advantageous to allow the temporary closing of the nozzle during additive manufacturing of the object. This for example allows the position of the printing bed to be changed during additive manufacturing of the object, so that the additive manufacturing of the object can be resumed at a different position relative to the printing bed without any of the liquid material flowing out of the nozzle in the meantime.

In an embodiment of the system according to the present invention, the conveyor comprises at least one screw for transporting the fed material and the liquid material through the barrel. The at least one screw comprises a central shaft that is provided with protruding elements. The protruding elements comprise, for example, a thread.

The inventors have found that by means of the at least one screw, the fed material and the liquid material can be transported through the barrel in a controlled way.

Preferably, the expansion space in the nozzle is dimensioned so that it provides a buffer for the ejection of the liquid material as a result of more than one revolution, preferably at least two revolutions, preferably at least three revolutions of the at least one screw.

In an embodiment of the system according to the present invention, the at least one screw has an outer diameter of at least 11 mm, preferably at least 12 mm, more preferably at least 13 mm, even more preferably at least 14 mm, and most preferably at least 15 mm, and at most 29 mm, preferably at most 28 mm, more preferably at most 27 mm, even more preferably at most 26 mm, and most preferably at most 25 mm. Preferably, the barrel has an inner diameter that is substantially equal to the outer diameter of the at least one screw. Hereby, the inner diameter of the barrel is the diameter of a cylinder shaped cavity in the barrel in which the at least one screw is arranged.

This embodiment is advantageous for providing a system for additive manufacturing of large objects, as the larger dimensions of the at least one screw and the barrel allow a larger amount of the fed material and the liquid material to be processed.

In an embodiment of the system according to the present invention, the at least one screw is divided into a plurality of screw zones. Each screw zone is adapted for a different phase in the process of transporting and liquefying the fed material.

This embodiment is advantageous to make the at least one screw optimally transport the fed material and the liquid material through the barrel during different phases in the process of transporting and liquefying the fed material, such as for example retracting the material fed from the feeder, liquefying the retracted material and pumping along the liquid material.

In an embodiment of the system according to the present invention, in each screw zone, at least one property of the at least one screw selected from the list consisting of the shape and/or dimensions of the protruding elements, the shape and/or dimensions of the central shaft, the diameter of the at least one screw and the material of the at least one screw, is adapted for the corresponding phase in the process of transporting and liquefying the fed material.

In an embodiment of the system according to the present invention, the at least one screw comprises a first screw zone that is adapted for retracting the material fed from the feeder. The at least one screw comprises a second screw zone that is adapted for liquefying the retracted material. The at least one screw comprises a third screw zone that is adapted for pumping along the liquid material.

In an embodiment of the system according to the present invention, the at least one screw is of modular construction with interchangeable elements that each provide a different screw zone.

This embodiment is advantageous for adjusting the plasticizer to use with different kinds of materials without having to replace the at least one screw as a whole. Furthermore, this embodiment is also advantageous to allow repairs to be made to the at least one screw, wherein in case of damage to the at least one screw, only the damaged interchangeable elements need to be replaced and not the entire at least one screw.

In an embodiment of the system according to the present invention, the conveyor comprises a first screw and a second screw. The first screw and the second screw are arranged parallel to each other. The first screw and the second screw rotate in the same direction of rotation relative to each other. In an alternative embodiment, the first screw and the second screw rotate in opposite directions of rotation relative to each other.

In an embodiment of the system according to the present invention, the at least one screw is driven by at least one motor. Preferably, the control unit is operationally connected to the at least one plasticizer for controlling the motor for driving the at least one screw.

In an embodiment of the system according to the present invention, the at least one motor is arranged for driving the at least one screw with a predetermined torque. Preferably, the at least one motor is arranged for setting the predetermined torque.

This embodiment is advantageous for transporting the fed material and the liquid material through the barrel by means of the at least one screw in a controlled way, and thereby also for ejecting the liquid material from the nozzle in a controlled way.

In an embodiment of the system according to the present invention, the at least one motor is arranged for positioning.

This embodiment is advantageous to allow precise control over the transport of the fed material and the liquid material through the barrel by means of the at least one screw, and thereby also of the flow of the liquid material expelled from the nozzle.

In an embodiment of the system according to the present invention, the at least one motor is a servomotor.

The inventors have found that a servomotor is advantageous for setting the predetermined torque and for positioning.

In an embodiment of the system according to the present invention, the at least one screw is driven directly by the at least one motor.

This embodiment is advantageous to allow precise control over the transport of the fed material and the liquid material through the barrel by means of the at least one screw, and thereby also of the flow of the liquid material expelled from the nozzle, as there is no coupling between the motor and the at least one screw in which disruptions could occur.

In an embodiment of the system according to the present invention, the first support device is arranged for simultaneously moving the printing bed according to at least 3 degrees of freedom.

This embodiment is advantageous to allow smooth movement of the printing bed and the object to be additively manufactured that is arranged thereon during additive manufacturing of the object, which is beneficial to the quality of the object to be additively manufactured and the precision with which the object can be additively manufactured.

In an embodiment of the system according to the present invention, the first support device comprises a robotic arm for supporting and moving the printing bed.

The inventors have found that the robotic arm is an advantageous support device to allow the printing bed to be supported and to be moved according to 6 degrees of freedom in a stable and controlled way. The robotic arm is also advantageous for supporting and moving heavy additively manufactured objects on the printing bed.

In an embodiment of the system according to the present invention, the system comprises at least one second support device for supporting the at least one plasticizer. The at least one second support device is arranged for tilting the at least one plasticizer so that the output opening remains positioned at the predetermined fixed position in the system. Preferably, the control unit is operationally connected to the at least one second support device for controlling the at least one second support device for supporting and tilting the at least one plasticizer. Preferably, the control unit is arranged for controlling the at least one second support device in such a way that the output opening of the nozzle of the at least one plasticizer, at least during additive manufacturing of the object, remains positioned at the predetermined fixed position in the system.

This embodiment is advantageous to allow the orientation of the at least one plasticizer, and in particular of its nozzle, to be adapted, taking into account the fixed position of the output opening, to the position and orientation of the printing bed and the object to be additively manufactured that is arranged thereon. This is because in certain orientations of the printing bed, and thus the object to be additively manufactured, it may be more beneficial to the quality of the object to be additively manufactured if the nozzle of the at least one plasticizer has its orientation adjusted to allow the liquid material to be properly applied onto the printing bed or the part of the object to be additively manufactured already applied thereon.

In an embodiment of the system according to the present invention, the nozzle of the at least one plasticizer is tiltable relative to the at least one plasticizer.

This embodiment is advantageous to allow changing the orientation of the nozzle, if that specific orientation of the nozzle may be beneficial for additive manufacturing of a specific object.

In an embodiment of the system according to the present invention, the printing bed comprises a plurality of control zones. The printing bed comprises a second conditioner that is arranged for heating and cooling the control zones independently of each other. Preferably, the control unit is operationally connected to the printing bed for controlling the second conditioner for heating and cooling the control zones independently of each other.

This embodiment is advantageous for preventing unwanted distortions of the object to be additively manufactured, which can occur as a result of differences in temperature between different parts of the object to be additively manufactured. These differences in temperature can then be counteracted in this embodiment by heating and cooling the different control zones of the printing bed independently of each other.

In an embodiment of the system according to the present invention, the system comprises a third conditioner that is arranged for adjusting at least one environmental parameter selected from the temperature, the atmospheric humidity and the composition of the air outside the nozzle at the output opening. Preferably, the control unit is operationally connected to the at least one plasticizer for controlling the third conditioner for adjusting the at least one environmental parameter outside the nozzle at the output opening.

This embodiment is advantageous to allow the liquid material to be solidified in a controlled way after being ejected from the nozzle during additive manufacturing of the object, and thus to prevent distortions to the object to be additively manufactured.

In an embodiment of the system according to the present invention, the printing bed comprises an interchangeable printing plate for applying the liquid material from the nozzle thereon for additive manufacturing of the object, or the printing bed is interchangeable as a whole.

The use of interchangeable printing plates on the printing bed is advantageous to allow quickly starting the additive manufacturing of a next object after additively manufacturing a first object, without having to wait until the first object can be removed from the printing bed. The first object can be set aside along with the printing plate, after which a new printing plate can be placed onto the printing bed for additively manufacturing the next object thereon.

The use of an interchangeable printing bed is to allow the system to be provided for different kinds of applications with a type of printing bed that is adapted for each specific application. Here, a universal coupling is preferably provided between the support device and the printing bed for controlling the printing bed, powering the printing bed, and other provisions.

In an embodiment of the system according to the present invention, the system comprises a storage for storing a plurality of the interchangeable printing plates.

In an embodiment of the system according to the present invention, the system comprises at least one finisher for finishing the object. Preferably, the control unit is operationally connected to the at least one finisher for controlling the at least one finisher for finishing the object.

This embodiment is advantageous to allow further post-processing to be applied to the object in the system, if so desired, after additively manufacturing the object. This post-processing may for example by the removal of excess material or the cleaning of the surface of the additively manufactured object.

In an embodiment of the system according to the present invention, the system comprises a plurality of stations. In each station, one of the at least one plasticizer and, if present, the at least one finisher is arranged interchangeably.

This embodiment is advantageous for additive manufacturing of objects from different kinds of materials, wherein the plasticizer can be used in a different station for applying each kind of material, and for carrying out different kinds of post-processing on the additively manufactured object, wherein the finisher in a different station can be used for each kind of post-processing.

In an embodiment of the system according to the present invention, the system further comprises a preparation device that is arranged for making the material to be fed to the at least one plasticizer suitable for use in the at least one plasticizer. Preferably, the control unit is operationally connected to the preparation device for controlling the preparation device for making the material to be fed to the at least one plasticizer suitable for use in the at least one plasticizer.

This embodiment is advantageous for improving the quality of the object to be additively manufactured by preventing the supply of unsuitable material to the at least one plasticizer, which could possibly cause defects in the object to be additively manufactured.

In an embodiment of the system according to the present invention, the system comprises a first compartment in which the at least one plasticizer is mainly housed. The system comprises a second compartment in which the first support device and the printing bed are housed. The first compartment connects to the second compartment. The nozzle of the at least one plasticizer extends from the first compartment to the second compartment. Preferably, the first compartment is located above the second compartment.

This embodiment offers the advantage that the printing bed and the additively manufactured object applied onto the printing bed can be separated as much as possible from the at least one plasticizer, of which the heat generation may have a negative impact during additive manufacturing of the object. Furthermore, this embodiment is also advantageous for improving the quality of the object to be additively manufactured, as the object to be additively manufactured applied onto the printing bed in the second compartment can be shielded from contaminations, and because the additive manufacturing can take place under controlled environmental conditions in the second compartment.

In an embodiment of the system according to the present invention, the system comprises a fourth conditioner that is arranged for adjusting at least one environmental parameter selected from the list consisting of the temperature and the atmospheric humidity in the second compartment.

This embodiment is advantageous for the quality of the object to be additively manufactured, as the additive manufacturing of the object can be carried out in the second compartment under optimal environmental conditions controlled by the fourth conditioner.

In an embodiment of the system according to the present invention, the storage is housed in the second compartment.

This embodiment offers the advantage that when additively manufacturing different objects in succession, the printing plate of the printing bed can be exchanged without each time having to bring in new printing plates from outside the second compartment, which could introduce contaminations into the second compartment and impact any controlled environmental conditions in the second compartment.

In an embodiment of the system according to the present invention, the at least one finisher is mainly housed in the first compartment when the at least one finisher generates more than a predetermined amount of heat while finishing the object. In an embodiment of the system according to the present invention, the at least one finisher is mainly housed in the second compartment when the at least one finisher generates less than the predetermined amount of heat while finishing the object.

This embodiment offers the advantage that the printing bed and the additively manufactured object applied onto the printing bed can be separated as much as possible from at least one finisher, which generates a relatively large amount of heat that may have adverse effects during additive manufacturing of the object.

In an embodiment of the system according to the present invention, the system comprises a third compartment in which a control unit is housed that is operationally connected to the different parts of the system for controlling the different parts of the system.

This embodiment is advantageous for the safety of the user of the system according to the present invention, as the user, in the third compartment, is shielded from the other parts of the system.

In an embodiment of the system according to the present invention, the system comprises a fourth compartment in which the preparation device is housed.

This embodiment is advantageous for allowing the material to be fed to the at least one plasticizer to be made suitable for use in the at least one plasticizer while shielded and under controlled environmental conditions.

Furthermore, the present invention also provides a use of the system according to the present invention for additive manufacturing of an object, or a method for additive manufacturing of an object by means of the system according to the present invention. Hereby, the use or the method comprises at least the step of applying the liquid material ejected from the output opening of the nozzle of the at least one plasticizer in a layer on the printing bed or on a layer of the ejected liquid material previously applied on the printing bed.

### Brief description of the drawings

The invention will hereafter be elucidated in further detail by means of the following description and the appended figures.
Figure 1 shows a perspective view of a system for additive manufacturing of an object according to a first embodiment of the present invention.
Figure 2 shows a side view of the system of Figure 1.
Figure 3 shows a perspective view of a system for additive manufacturing of an object according to a second embodiment of the present invention.
Figure 4 shows a side view of the system of Figure 3.
Figure 5 shows a top view of the system of Figure 3.
Figure 6 shows a perspective view of a plasticizer of a system for additive manufacturing of an object according to an embodiment of the present invention.
Figure 7 shows a cross section through the plasticizer of Figure 6.
Figure 8 shows a cross section through the nozzle of the Figure 6.
Figures 9A and 9B show a cross-sectional schematic depiction of a head of a nozzle according to an embodiment of the present invention while smearing expelled liquid material.
Figure 10 shows a screw of a plasticizer of a system for additive manufacturing of an object according to an embodiment of the present invention.

### Modes for carrying out the invention

The present invention will hereafter be described with respect to particular embodiments and with reference to certain drawings, but the invention is not limited thereto and is defined only by the claims. The drawings shown here are merely schematic depictions and are non-limiting. In the drawings, the dimensions of certain parts may be exaggerated, meaning that the parts in question are not drawn to scale, for illustrative purposes only. The dimensions and the relative dimensions do not necessarily correspond to the actual reductions to practice of the invention.

Furthermore, terms such as "first", "second", "third" and the like are used in the description and in the claims for distinguishing between similar elements, and not necessarily for describing a sequential or chronological order. The terms in question are interchangeable under the appropriate circumstances and the embodiments of the invention can operate in other sequences than described or illustrated here.

Moreover, terms such as "top", "bottom", "over", "under" and the like are used in the description and the claims for descriptive purposes and not necessarily for indicating relative positions. The terms so used are interchangeable under the appropriate circumstances, and the embodiments of the invention can operate in other orientations than those described or illustrated herein.

The term "comprising" and derivative terms, as used in the claims, should not be interpreted as being restricted to the means listed respectively thereafter; the term does not exclude other elements or steps. It should be interpreted as specifying the stated features, integers, steps or components as referred to, without, however, precluding the presence or addition of one or more additional features, integers, steps or components, or groups thereof. Thus, the scope of an expression such as "a device comprising means A and B" is not limited to devices consisting only of components A and B. What is meant, on the contrary, is that with respect to the present invention, the only relevant components of the device are A and B.

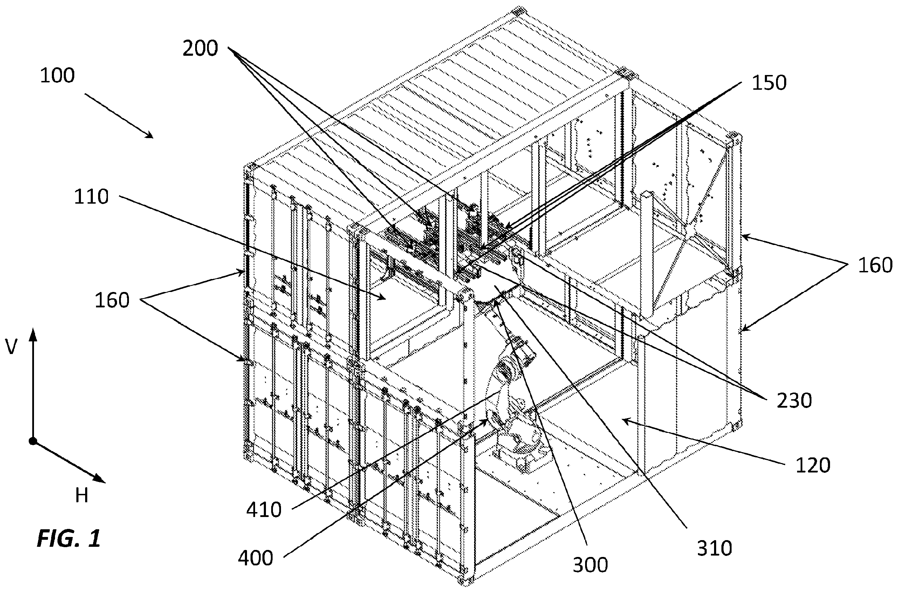

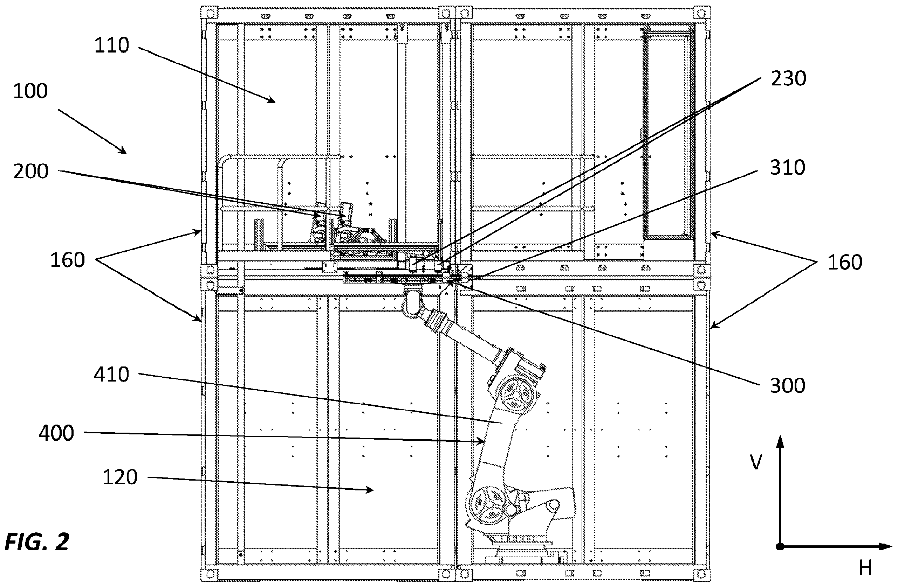

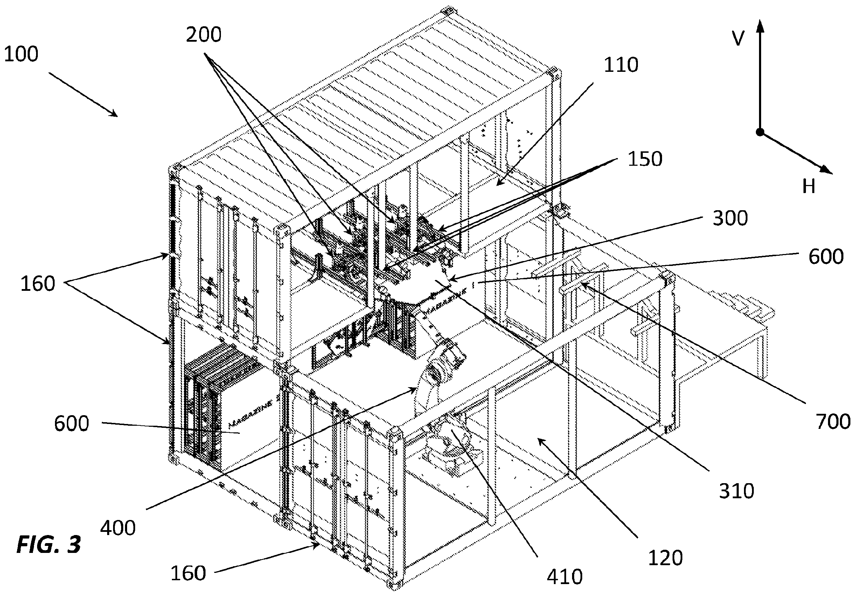

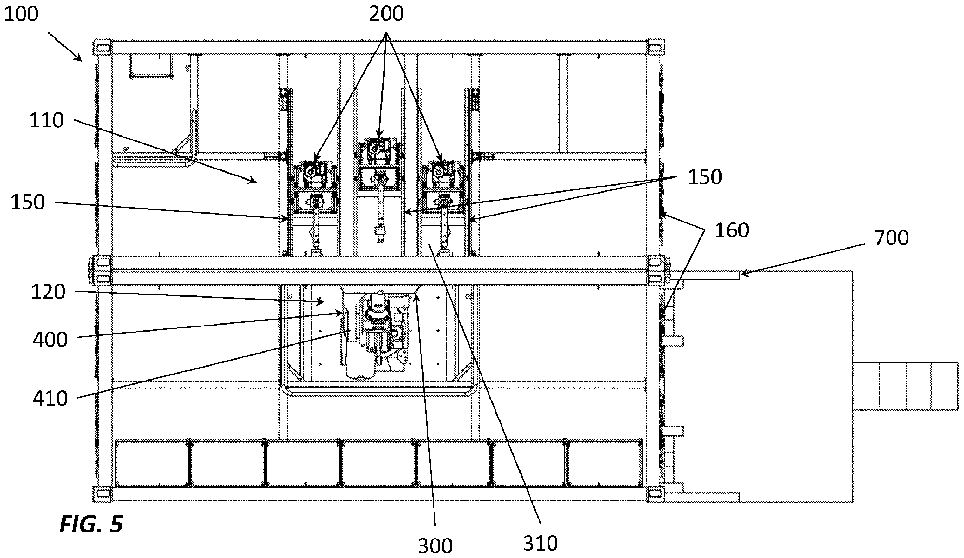

Figures 1 and 2 show a system 100 according to a first embodiment of the present invention for additive manufacturing of an object, in a perspective view and a side view, respectively. Figures 3-5 show a system 100 according to a second embodiment of the present invention for additive manufacturing of an object, in a perspective view, a side view and a top view, respectively.

The systems 100 according to both embodiments comprise three plasticizers 200 that are each arranged for outputting a different type of molten plastic material for use during additive manufacturing of the object. This offers the advantage that objects consisting of different plastic materials or different objects from different plastic materials can be manufactured using the same system 100. It should be noted that although in the embodiments discussed, plastic material is used as a material for additive manufacturing of the object, in alternative embodiments, any other materials known to the person skilled in the art that are suitable for the additive manufacturing of objects may also be used, such as for example a fiber wax, a mineral or a gel. It should also be noted that in alternative embodiments, the system 100 may be provided with a different number of plasticizers 200.

Each plasticizer 200 is housed in a different station 150 of the system 100. Preferably, the plasticizers 200 are housed interchangeably in the stations 150, so that the system 100 is adjustable for the use of other plastic materials for additive manufacturing of objects. If so desired, finishers (not shown) can also be housed in the stations 150, which are arranged for finishing an object that was additively manufactured using the system 100. The finishing of the object may for example entail removing excess plastic material, cleaning or coating the object.

The plasticizers 100 are housed in a first compartment 110 of the system 100. The first compartment 110 is preferably reserved for housing parts of the system 100 that generate heat, which heat could have a negative impact on the process of additive manufacturing of the object, which mainly takes place in a dedicated second compartment 120 of the system 100. For the same reason, the first compartment 110 is preferably located above the second compartment 120, so that the heat generated by the parts of the system 100 housed in the first compartment 110 does not pass through the second compartment 120 as it rises.

To provide the first compartment 110 and the second compartment 120, containers 160 can be used, as in the embodiments shown, but this can also be accomplished in any other suitable way known to the person skilled in the art. Containers 160 offer the advantage that they provide simple building blocks for the modular construction of the first compartment 110, the second compartment 120 and any additional compartments of the system 100.

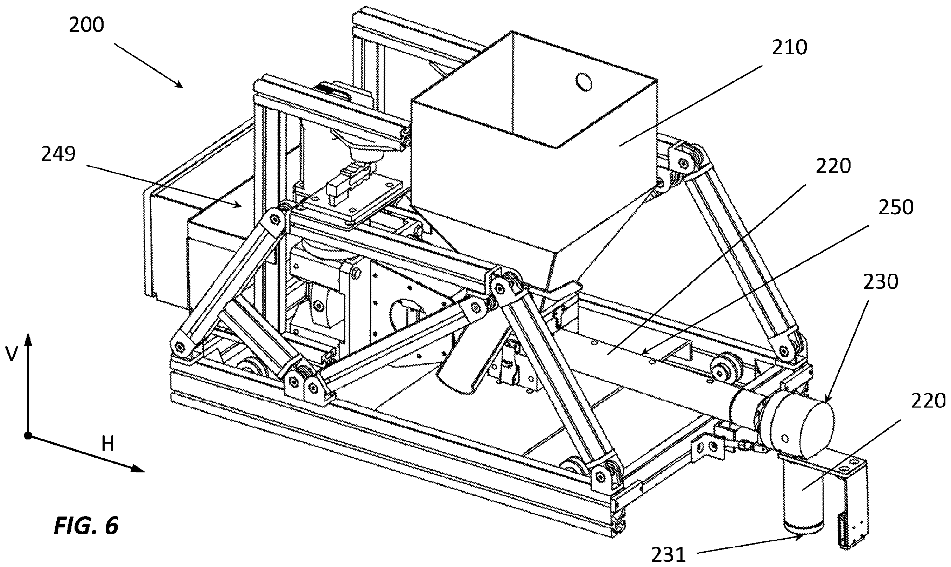

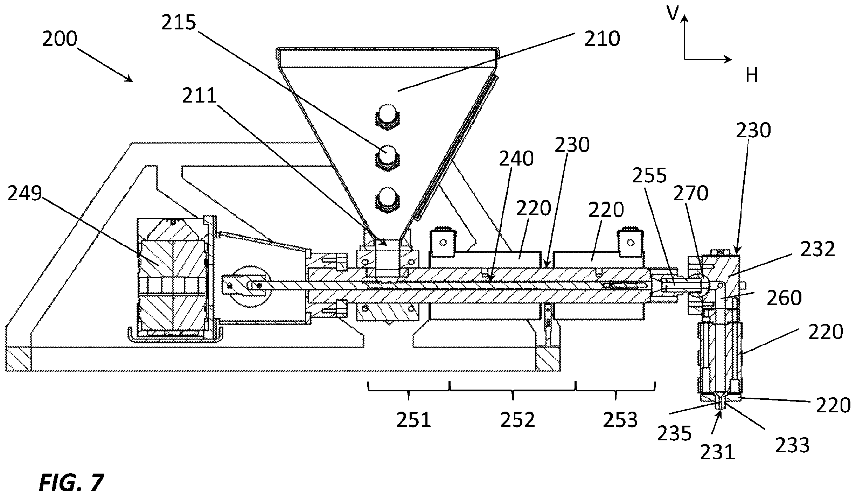

The plasticizer 200, as shown in more detail in the Figures 6 and 7, comprises a feeder 210 that is arranged for feeding a plastic in a solid state in the plasticizer 200. In the embodiment shown, a hopper 210 is used for the feeder 210, but in other embodiments, other suitable feeders known to the person skilled in the art may also be used. The fed plastic material is preferably a thermoplastic material. Preferably, the plastic is also supplied in the form of a granulated material, a regranulated material, a ground material, a densified material or a combination thereof.

The feeder 210 is provided with an agitator 215 for agitating fed plastic material, in the form of a granulated material, a regranulated material, a ground material, a densified material or the like, for example by making it vibrate. This is because, when using a fed plastic material in such a form, "bridges" may form in the fed plastic material at the level of a feed opening 211 to the further parts of the plasticizer 200, which "bridges" form an obstruction to a smooth feeding of the plastic. By agitating the fed plastic material, the agitator 215 ensures that the "bridges" are broken, so that the plastic feed can again run smoothly. The agitator 215 may be a vibrating actuator for making the hopper 210 itself vibrate, and with it the fed plastic material present in the hopper. However, other embodiments of the agitator are also possible, such as for example a device for creating air currents in the fed plastic material.

The plastic is fed from the feeder 210 through the feed opening 211 to a barrel 250 of the plasticizer 200, which barrel 250 is arranged for melting the fed plastic material therein. The molten plastic material is then further transported by a conveyor 240 of the plasticizer 200 to a nozzle 230 of the plasticizer 200. Finally, the molten plastic material is ejected from the plasticizer 200 through an output opening 231 of the nozzle 230, to be used for additive manufacturing of an object. The diameter d4 of the output opening 231 is preferably in the range of 2.5-10 mm, in order to output a sufficient amount of the molten plastic material for additive manufacturing of large objects.

In order to melt the fed plastic material, the plasticizer 200 is provided with a first conditioner 220 around the barrel 250. The first conditioner 220 is arranged for heating the barrel 250 and the plastic material present therein, and thus to melt the fed plastic material. The barrel 250 extends along a horizontal direction H, so that the excess heat generated by the first conditioner 220 can quickly rise out of the plasticizer 200 without impacting or disrupting any other processes in the barrel 250 and the plasticizer 200. In the embodiment shown, the first conditioner 220 is also arranged for heating the nozzle 230, so as to ensure that the molten plastic material remains in a liquid state while passing through the nozzle 230, and for maintaining the molten plastic material in the nozzle 230 under controlled conditions, and to thus allow an even flow of the molten plastic material to be expelled at the output opening 231 of the nozzle 230, preferably at a predetermined pressure, preferably at a predetermined pressure in the range of 20-200 bar. Here, the heating of the nozzle 230 and the heating of the barrel 250 by the first conditioner 220 may be carried out independently of each other, so that the heating of the barrel 250 can be specifically attuned to melting the fed plastic material, and so that the heating of the nozzle 230 can be specifically attuned to keeping the molten plastic material in a liquid state and under controlled conditions.

In the barrel 250, different zones 251, 252, 253 can be distinguished. In a first zone 251, the plastic material fed from the feeder 210, still in solid state, is pulled into the barrel 250. In a second zone 252, the retracted plastic material is then melted by means of the first conditioner 220. Thus, in the second zone 252, the transition is made from the plastic in a solid state to the molten plastic material in a liquid state. In a third zone 253, the molten plastic material is then further pumped to the nozzle 230.

The fed plastic material and the molten plastic material is transported through the barrel 250 along the horizontal direction H by means of the conveyor 240. In the embodiment shown, the conveyor 240 comprises a screw 241 driven by a motor 249. The screw 241 extends in its length direction through the entire barrel in the horizontal direction H. The outer diameter d1 of the screw 241 is substantially equal to the inner diameter of the barrel 250, causing the plastic material fed into the barrel by means of the thread 244 of the screw 241 to be transported through the barrel 250 when rotating the screw 241 by means of the motor 249. The outer diameter d1 of the screw 241 is preferably in the range of 15-25 mm. Such dimensions of the screw 241 and, accordingly, of the barrel 250 allow larger amounts of the fed plastic material and the molten plastic material to be processed in view of manufacturing large objects.

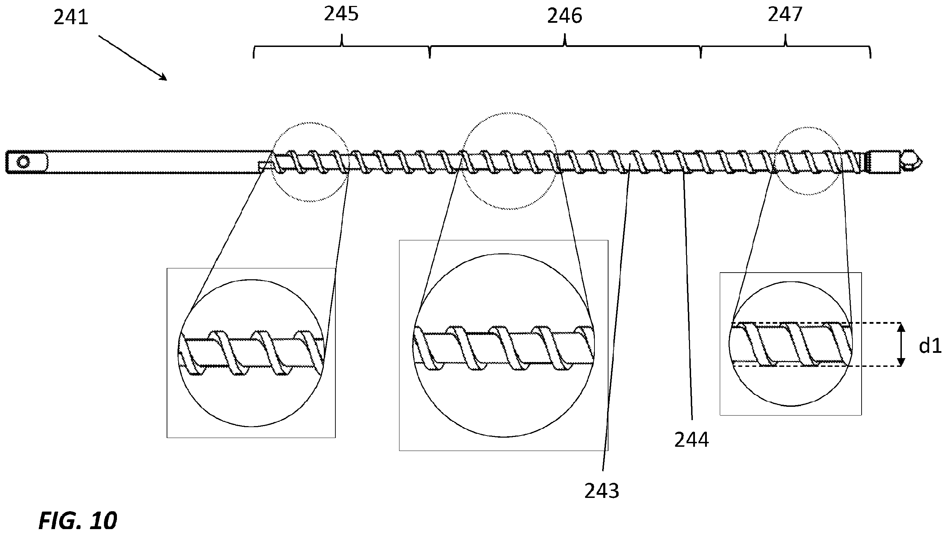

The screw 241, which is shown in more detail in Figure 10, is made up of a central shaft 243 provided with protruding elements 244. In the embodiment shown, these protruding elements 244 are a thread 244, but in other embodiments, if so desired, other suitable protruding elements known to the person skilled in the art may be used that fulfill the function of transporting and mixing the fed plastic material and the molten plastic material.

The screw 241 is divided into different screw zones 245, 246, 247 that are adapted for different phases in the process of transporting and melting the fed plastic material, which phases take place in the different zones 251, 252, 253 of the barrel 250. Thus, the first screw zone 245 is adapted for retracting the fed plastic material in the first zone 251 of the barrel 250, the second screw zone 246 is adapted for the process of melting the retracted plastic material in the second zone 252 of the barrel 250, and the third screw zone 247 is adapted for pumping the molten plastic material along to the nozzle 230. In alternative embodiments, the screw may also be provided with fewer screw zones or with additional screw zones that are adapted for possible additional phases of transporting and melting the fed plastic material.

To this end, in the embodiment shown, the diameter of the central shaft 243 increases and the width of the thread 244 increases from the first screw zone 245 toward the third screw zone 247. As a result, per each screw zone 245, 246, 247, there is less available space between the screw 241 and the wall of the barrel 250. This is because in the first screw zone 245, this space needs to be of sufficient size to allow enough of the fed plastic material to be pulled into the barrel 250 as a granulated material, a regranulated material, a ground material and/or a densified material, taking into account the open space between the fed pieces of plastic material, in order to obtain a continuous flow of the molten plastic material further at the output opening 231 of the nozzle 230. At the level of the second screw zone 246, the available space becomes smaller in order to press the retracted plastic material, which is already starting to melt, closer together. At the level of the third screw zone 247, the available space becomes even smaller, in order to bring the molten plastic material properly together and thus allow a continuous flow of molten plastic material to be pumped to the nozzle 230. In alternative embodiments of the screw, other properties than the diameter of the central shaft and the width of the thread may also be adapted to the different phases in the process of melting and transporting the plastic, such as for example the type of protruding elements, the shape and/or dimensions of the protruding elements, the shape and/or dimensions of the central shaft, the diameter of the screw, and/or the material of the screw.

In the embodiment shown, the screw 241 is made up of a single piece, but in alternative embodiments, the screw may also be constructed in a modular fashion from interchangeable elements that each provide a different screw zone. This allows the screw to be repaired or modified for use in different circumstances in a simple way.

In the embodiment shown, the conveyor 240 comprises a single screw 241. In alternative embodiments, however, the conveyor 240 may be provided with multiple screws. One possibility is, for example, the use of two screws arranged parallel and adjacent to each other, wherein the two screws rotate in the same direction of rotation or in opposite directions of rotation.

The motor 249 is arranged to rotate the screw 241 at least in a first direction of rotation, wherein the fed plastic material and the molten plastic material are transported through the barrel 250 in a direction from the feeder 210 to the nozzle 230, and in particular the output opening 231 of the nozzle. The motor 249 may also be arranged to rotate the screw in a second direction of rotation, opposite to the first direction of rotation, wherein the fed plastic material and the molten plastic material are transported through the barrel 250 in a reverse direction from the nozzle 230 to the feeder 210. The latter may be useful for temporarily stopping the flow of molten plastic material from the nozzle 230 to allow the object to be moved during its additive manufacturing. This prevents unwanted molten plastic material from continuing to flow from the nozzle 230 in the meantime. If so desired, for the same reason, the nozzle 230 may also be provided with a closing element (not shown) for opening and closing the output opening 231. Preferably, the motor 249 is provided with positioning, and the motor 249 is arranged for driving the screw 241 with an adjustable torque that can be kept constant while driving the screw 241. This allows the flow of molten plastic material from the output opening 231 of the nozzle 230 to be controlled and adjusted precisely. To this end, a servomotor is preferably used as the motor 249. The motor 249 is directly connected to the screw 241 and the axis of rotation of the motor 249 is located as an extension of the screw 241 for optimal transmission from the motor 249 to the screw 241.

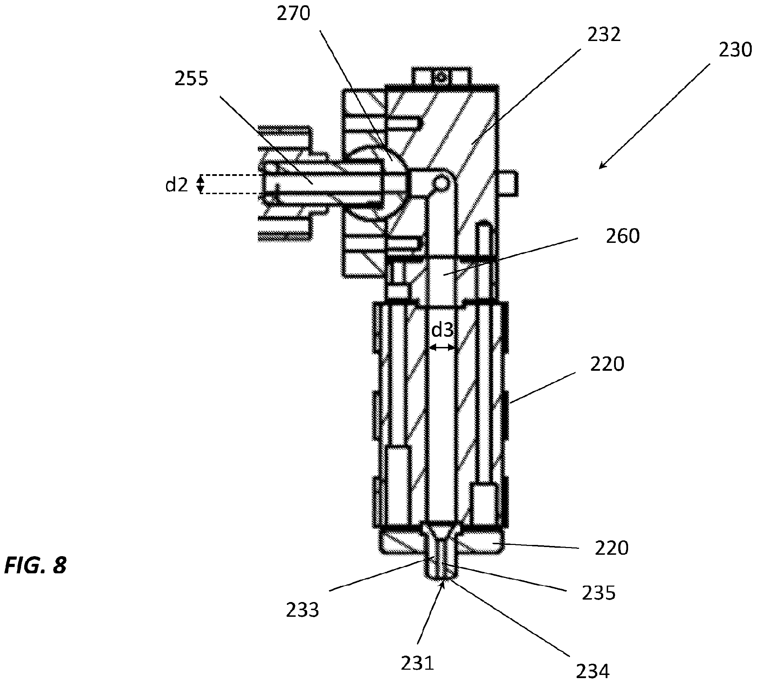

The nozzle 230 of the plasticizer 200, shown in more detail in Figure 8, comprises a main body 232 that is connected to the barrel 250 and from there extends downward along the vertical direction V, and at a bottom end of the main body 232, the nozzle 230 is provided with a head 233 having the output opening 231. The nozzle 230 extends from the first compartment 110 of the system 100 to the second compartment 120 of the system 100. The nozzle 230 is tiltably attached to the barrel 250 by means of a ball joint 270. The ball joint 270 allows the nozzle 230 to be tilted relative to the further plasticizer 200 at times when the system 100 is not currently involved in the additive manufacturing of an object. During additive manufacturing of an object, on the other hand, the nozzle 230 remains in the same position relative to the further plasticizer 200. This allows the nozzle 230 to be placed, prior to starting the additive manufacturing of a certain type of object, into a desired position that is beneficial for additive manufacturing of that specific type of object.

The nozzle 230 is provided with an expansion space 260 in the main body 233. The expansion space 260 extends along the vertical direction V through the main body 232 as a conduit for the molten plastic material. The expansion space 260 thereby extends from a passage duct 255 for the molten plastic material out of the barrel 250 to an output duct 235 for the molten plastic material in the head 233 of the nozzle 230. The expansion space 260 has a diameter d3 that is larger than the diameter d2 of the upstream passage duct 255 and the diameter d4 of the downstream output duct 235. Thus, the expansion space 260 forms a buffer for accommodating changes in the flow of the molten plastic material from the barrel 250, so that at the output opening 231 of the nozzle 230, an even flow of the molten plastic material can be expelled. Preferably, the expansion space 260 is dimensioned so that it provides a buffer for the ejection of molten plastic material out of the barrel 250 as a result of multiple revolutions of the screw 241 in the barrel 250, preferably at least two revolutions, preferably at least three revolutions.

If so desired, the expansion space 260 may be arranged so that its volume is adjustable, which allows responding to larger fluctuations in the flow of the molten plastic material from the barrel 250, so that even in these circumstances, an even flow of the molten plastic material can be obtained at the output opening 231 of the nozzle 230. An expansion space 260 provided in such a way makes it possible to respond to a large increase in the flow of the molten plastic material by increasing the volume of the expansion space 260, and to respond to a large decrease in the flow of the molten plastic material by decreasing the volume of the expansion space. Preferably, the volume of the expansion space is adjusted in such a way that a predetermined pressure can be maintained at the output opening 230 of the nozzle 230.

The adjustable volume of the expansion space 260 also, if so required by the application, allows the pressure of the molten plastic material at the output opening 231 of the nozzle 230 to be adjusted temporarily, for example to make it possible to temporarily eject a larger or smaller amount of the molten plastic material from the nozzle 230. This may for example be useful if, during additive manufacturing of the object, more or less of the molten plastic material is to be applied at certain positions in the object. This can also be used as a fine tuning of the amount of ejected molten plastic material, combined with a coarse tuning by adjusting the rotation speed of the screw 421 of the plasticizer 200.

Adjusting the volume of the expansion space 260 can for example be carried out by providing the walls of the expansion space 260 with one or more slidable wall sections that can be slid into the expansion space 260 to decrease the volume of the expansion space 260, and that can be slid out of the expansion space 260 to increase the volume of the expansion space 260. Such slidable wall sections may for example be bimetal elements in the wall of the expansion space 260, which, as it were, form "muscles" that can contract and relax the wall of the expansion space for respectively decreasing and increasing the volume of the expansion space 260. However, the slidable wall sections can also be provided in other ways, for example in the form of a membrane or of a piston or any other variable actuator in an opening in the wall.

The plasticizer 200 comprises a controller for controlling the adjustment of the volume of the expansion space 260 in such a way that a predetermined pressure is maintained in the molten plastic material at the output opening 231 of the nozzle 230. To allow the volume of the expansion space 260 to be adjusted, the controller is operationally connected to the slidable wall sections or any other mechanism for adjusting the volume of the expansion space 260. To allow the adjustment of the volume of the expansion space 260 to be controlled so as to achieve a predetermined pressure in the molten plastic material at the output opening 231 of the nozzle 230, the controller is provided with pressure sensors in the barrel 250, the expansion space 260 and the head 233 of the nozzle 230. The pressure in the molten plastic material measured by these pressure sensors offers an indication of the pressure in the molten plastic material at the output opening 231 of the nozzle 230, based on which the controller can adjust the volume of the expansion space 260 if this indication deviates from the predetermined pressure. The pressure sensor in the head 233 of the nozzle 230 offers a direct indication of the pressure in the molten plastic material at the output opening 231 of the nozzle 230, as this pressure sensor is located directly at the output opening 231. The pressure sensors in the barrel 250 and the expansion space 260 do not offer a direct indication of the pressure in the molten plastic material at the output opening 231 of the nozzle 230, but make it possible to predict an expected pressure in the molten plastic material, based on which the volume of the expansion space 260 can then be adjusted to allow an early response to pressure changes before they even occur at the output opening 231 of the nozzle 230. The pressure measured by the pressure sensor in the barrel 250 offers an indication of pressure changes to be expected in the expansion space 260, which allows the controller to adjust the volume of the expansion space 260 in a timely manner to compensate for these pressure changes. The pressure measured by the pressure sensor in the expansion space 260 offers a direct indication of pressure changes in the expansion space 260, which allows the controller to directly adjust the volume of the expansion space 260 to prevent these pressure changes from propagating to the output opening 231 of the nozzle 230. These pressure sensors can be used separately for the specified purpose, but the combination of the pressure sensors offers the advantage that along het trajectory of the flow of the molten plastic material, different checks may be carried out to verify whether the adjustments of the volume of the expansion space 260 have the desired effect. Thus, the pressure sensor in the expansion space 260 can be used to check if volume adjustments of the expansion space 260 based on the pressure measured by the pressure sensor in the barrel 250 have the desired effect, and the pressure sensor in the head 233 of the nozzle 230 can be used to check if volume adjustments of the expansion space 260 based on the pressure measured by the pressure sensor in the barrel 250 and/or the expansion space 260 have the desired effect.

As already mentioned above, the actual process of additive manufacturing of the object mainly takes place in the second compartment 120. To this end, in the second compartment 120, the system 100 is provided with a printing bed 300 having a printing plate 310 arranged for applying the molten plastic material from the nozzle 230 of the plasticizers 200 thereon for additive manufacturing of the object. The printing plate 310 has a diameter of approximately 1.5 m. The shown embodiment of the system 100 is arranged for additively manufacturing an object on the printing plate 310 up to a height of approximately 0.75 m, such that the object can occupy a volume of approximately 1.3 m³.

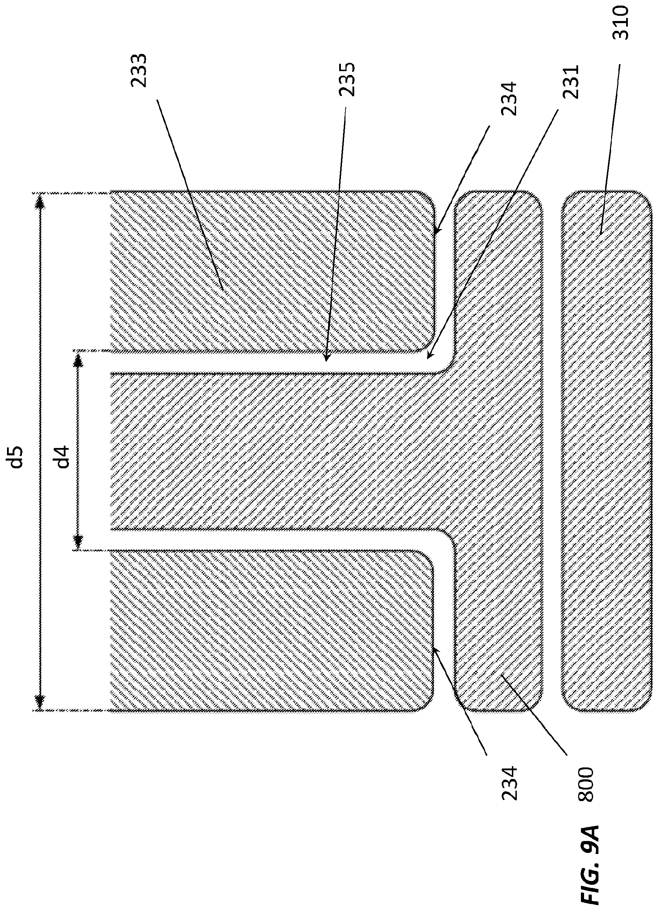

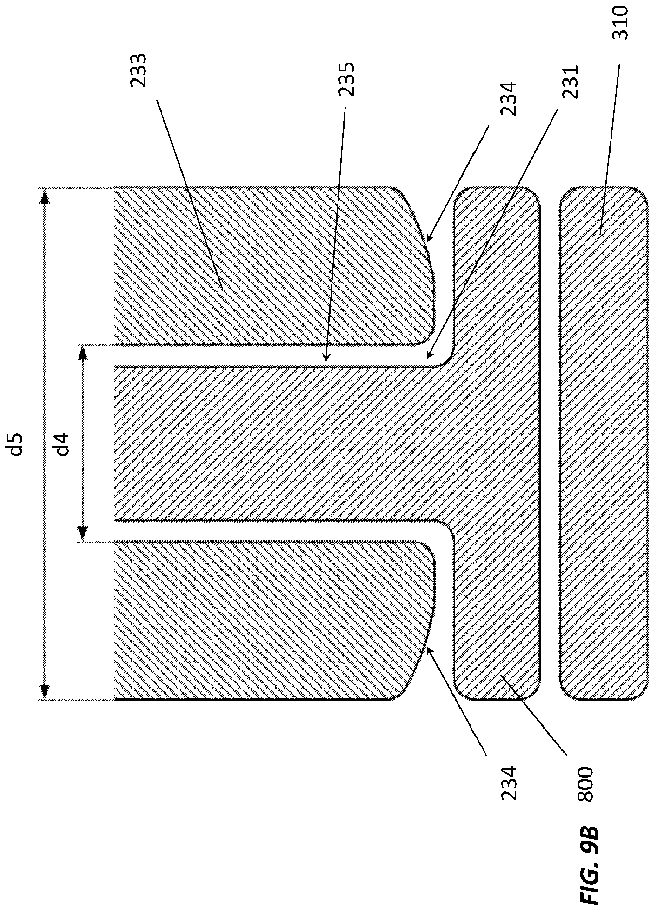

The plasticizer 200 is arranged, when applying the molten plastic material 800 onto the printing plate 310 or onto a layer of plastic material of the object to be additively manufactured that was previously applied onto the printing plate 310, to smear the ejected molten plastic material 800 onto the printing plate 310 or the layer of plastic material that was already applied. To this end, the head 233 of the nozzle 230, as shown in the Figures 9A and 9B, is provided at a bottom end with a smearing surface 234 extending around the output opening 231. The smearing surface 234 preferably has a diameter d5 in the range of 16-30 mm, preferably, but not necessarily depending on the diameter d4 of the output opening 231 of the nozzle 230. The smearing surface 234 may for example be a flat surface having rounded corners that extends in the plane of the output opening 231, as shown in Figure 9A, or a curved convex surface, as shown in Figure 9B, but other shapes are also possible.

For the smearing, the printing plate 310 or the layer of plastic material that was already applied is brought close to the head 233 of the nozzle 230, and the molten plastic material 800 is expelled from the output opening 231 at a relatively high predetermined pressure, causing the molten plastic material 800 to not only flow directly downward from the output opening 231, but also laterally between the smearing surface 234 and the printing plate 310 or the layer of plastic material that was already applied. Here, the predetermined pressure of the molten plastic material at the output opening 231 and the distance between the head 233 of the nozzle 230 and the printing plate 310 or the layer of plastic material that was already applied are mutually attuned in such a way that the ejected molten plastic material 800 does not flow beyond the edges of the smearing surface 234. When compared to a nozzle in which the molten plastic material only flows directly downward from the output opening, this allows a wider, yet uniform layer of the molten plastic material 800 to be applied onto the printing plate 310 or the layer of plastic material that was already applied.

For smearing the ejected molten plastic material 800 onto the printing plate 310 or the layer of plastic material that was already applied, the first conditioner 220, as shown in Figure 7 and 8, is preferably arranged for heating the head 233 of the nozzle 230 independently of the main body 232. This allows the heating of the main body 232 to be specifically attuned for keeping the molten plastic material in the expansion space 260 in the main body 232 of the nozzle 232 under controlled conditions, and for attuning the heating of the head 233 of the nozzle 230 specifically to the use of the head 233 when smearing the ejected molten plastic material onto the printing plate 310 or the layer of plastic material that was already applied. Thus, the heated head 233 of the nozzle 230 ensures that the ejected molten plastic material 800 remains liquid when smearing the ejected molten plastic material 800 onto the printing plate 310 or the layer of plastic material that was already applied, so that the smearing can occur smoothly without any hitches. The heated head 233 of the nozzle 230 also ensures that no solidified residues of the ejected molten plastic material 800 can remain on the head 233 of the nozzle 230 that would interfere with the proper application of the ejected molten plastic material 800 onto the printing plate 310 or the layer of plastic material that was already applied.

In the second embodiment of the system 100, shown in the Figures 3-6, the printing plate 310 is an interchangeable printing plate 310. The use of an interchangeable printing plate 310 makes it possible, after additively manufacturing an object, to lay aside the printing plate 310 together with the object on a depositing device 700 of the system 100 provided for that purpose, after which a new printing plate 310 can then quickly be placed onto the printing bed 300, so that additive manufacturing of a next object can immediately be started. This does not require waiting for the previously manufactured object to be fully hardened and removing it from the printing plate 310. The hardening can take place undisturbed on the printing plate 310 that was set aside, while the next object is already being manufactured on the new printing plate 310. To allow a new printing plate 310 to be quickly put in position, storages 600 are provided in the second compartment 120 in which a supply of the interchangeable printing plates 310 can be stored.

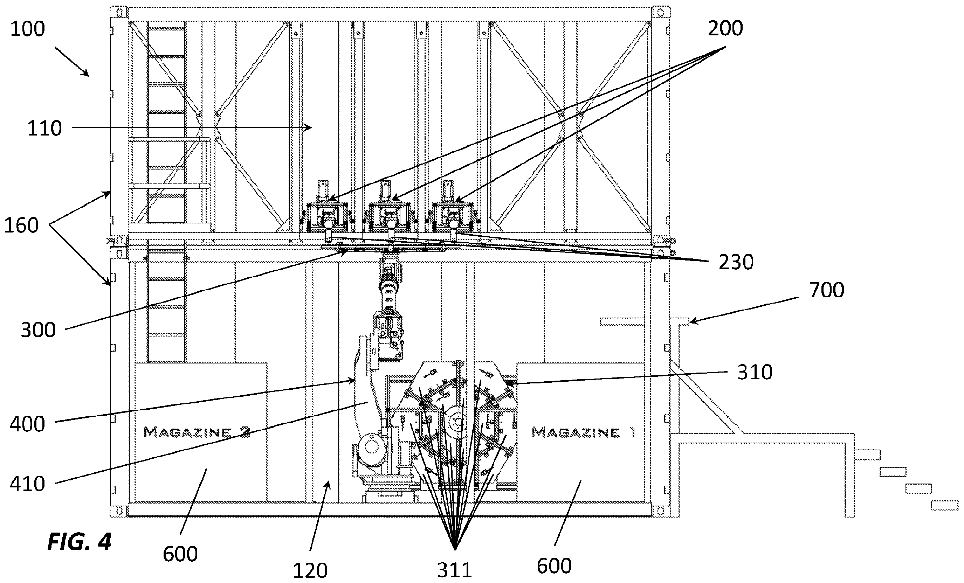

In the embodiments shown, the printing bed 300 is divided into a number of control zones 311, as can for example be seen in the unused printing bed 300 in Figure 4. The control zones 311 can be heated and cooled independently of each other by means of a second conditioner (not shown) of the system 100. The second conditioner allows the different parts of the object to be kept at a constant temperature during additive manufacturing thereof, so that no excessive differences in temperature can occur between the different parts of the object, which could lead to defects.

In the second compartment 120, a third conditioner (not shown) may also be provided outside of the nozzle 230 at the output opening 231. This third conditioner is arranged for conditioning the flow of molten plastic material being expelled from the nozzle 230. This is to bring the flow of molten plastic material in the optimal condition for additive manufacturing of the object. The conditioning of the flow may for example be carried out by adjusting the temperature, adjusting the atmospheric humidity or adjusting the composition of the air near the output opening 231 of the nozzle 230.

In the second compartment 120, a fourth conditioner (not shown) may also be provided. This fourth conditioner is arranged for conditioning the environmental conditions in the second compartment 120. This is to bring the environment in the second compartment 120 in the optimal condition for additive manufacturing of the object. The conditioning of the environmental conditions in the second compartment 120 may for example be carried out by adjusting environmental parameters, such as temperature or atmospheric humidity.

The printing bed 300 is supported by a first support device 400 of the system 100, which is arranged for moving the printing bed 300 according to 6 independent degrees of freedom, being 3 translational degrees of freedom and 3 rotational degrees of freedom. The support device 400 arranged in this way allows the printing bed 300 to always be positioned relative to the nozzle 230 of the plasticizer 200 during additive manufacturing of the object that the parts of the object still to be manufactured are always optimally supported while applying them onto the printing bed 300 or onto the already manufactured parts of the object. Preferably, the first support device 400 is further arranged for simultaneously moving the printing bed 300 according to at least 3 degrees of freedom, so that the printing bed 300 and the object arranged thereon can be moved smoothly during additive manufacturing of the object. In the embodiment shown, a robotic arm 410 is used for the first support device 400, but in alternative embodiments, other suitable support devices known to the person skilled in the art may also be used for supporting and moving the printing bed 300.

The system 100 is configured such that the output opening 231 of the nozzle 230 of each plasticizer 200, at least during additive manufacturing of the object, is located in a predetermined fixed position in the system 100. Here, at least one point of the output opening 231 is located in a predetermined fixed position in the system 100. The at least one point is preferably a central point or any other predetermined point of the output opening 231. In the case of a circular output opening 231, the at least one point may for example be the center of the circular opening.

In this configuration of system 100, the movements of the plasticizer 200 and the printing bed 300 relative to each other that are required for additive manufacturing of the object are mainly carried out by moving the printing bed 300. The plasticizer 200 remains positioned in a fixed position or is optionally tiltable to a limited degree, thus avoiding disruptions in the flow of the molten plastic material from the nozzle 230 which could be caused by unnecessary movements of the plasticizer 200.

To this end, the plasticizer 200 may be mounted in a fixed position in the system 100, so that the output opening 231 of the nozzle 230 as a whole is not moveable. In an alternative embodiment, the plasticizer 200 may be mounted onto a second support device (not shown) that is arranged for tilting the plasticizer 200, but controlled by a control unit (not shown) of the system 100 in such a way that the output opening 231 remains at the predetermined position during additive manufacturing of an object. In this embodiment, the output opening 231 is tiltable but not translatable. Tilting the output opening 231 may be advantageous to avoid the need to position the printing bed 300, during additive manufacturing of the object, at all too difficult angles to be able to properly support the object.

The control unit, which may also be arranged for controlling other parts of the system 100, can be housed, if so desired, in a separate third compartment (not shown) of the system 100. The third compartment is then accessible to users of the system 100 for operating the system 100 by means of the control unit, and the third compartment thereby shields the user from the different parts of the system 100 housed the other compartments 110, 120, which may pose a safety risk for the user. Thus, the user is for example shielded from the robotic arm 410, of which the movements could injure the user, and from the heat and possibly noxious fumes of the plasticizers 200.

In further embodiments, if so desired, the system 100 may also be provided with a preparation device (not shown) that is arranged for making the plastic to be fed to one or more of the plasticizers 200 suitable for use in the respective plasticizers 200. If so desired, the preparation device can be housed in a fourth compartment (not shown) of the system.

### References

- 100: system
- 200: plasticizer
- 210: feeder
- 211: feed opening
- 215: agitator
- 220: first conditioner
- 230: nozzle
- 231: output opening
- 232: main body
- 233: head
- 234: smearing surface
- 235: output duct
- 240: conveyor
- 241: screw
- 243: central shaft
- 244: protruding elements
- 245: first screw zone
- 246: second screw zone
- 247: third screw zone
- 249: motor
- 250: barrel
- 251: first zone
- 252: second zone
- 253: third zone
- 255: passage duct
- 260: expansion space
- 270: ball joint
- 300: printing bed
- 310: printing plate
- 311: control zones
- 400: first support device
- 410: robotic arm
- 600: storage
- 700: depositing device
- 800: molten plastic material
- 110: first compartment
- 120: second compartment
- 150: station
- 160: container
- H: horizontal direction
- V: vertical direction
- d1: outer diameter screw
- d2: diameter passage duct
- d3: diameter expansion space
- d4: diameter output opening
- d5: diameter smearing surface

## Claims

1. A system (100) for additive manufacturing of an object, wherein the system (100) comprises:
at least one plasticizer (200), wherein the at least one plasticizer (200) comprises a feeder (210) for feeding a material for additive manufacturing of the object, a first conditioner (220) at least arranged for heating the at least one plasticizer (200) for liquefying the fed material in such a way as to allow additive manufacturing of the object using the liquid material, a nozzle (230) having an output opening (231) for outputting the liquid material in a continuous flow, and a conveyor (240) for transporting the fed material and the liquid material through the at least one plasticizer (200) from the feeder (210) to the nozzle (230), wherein the system (100) is configured in such a way that the output opening (231) of the nozzle (230), at least during additive manufacturing of the object, is located in a predetermined fixed position in the system (100);
a printing bed (300) arranged for applying the liquid material from the at least one plasticizer (200) thereon for additive manufacturing of the object; and
a first support device (400) for supporting the printing bed (300) and moving the printing bed (300) according to 6 degrees of freedom,
wherein the at least one plasticizer (200) comprises a barrel (250) for liquefying the fed material therein, wherein the barrel (250) is connected to the feeder (210), wherein the first conditioner (220) is arranged for heating the barrel (250) for liquefying the fed material, wherein the barrel (250) extends along a horizontal direction (H), wherein the conveyor (240) is arranged for transporting the fed material and the liquid material through the barrel (250) along the horizontal direction (H), wherein the nozzle (230) comprises a main body (232) that is connected to the barrel (250) and that extends downward along a vertical direction (V), wherein the nozzle (230), at a bottom end of the main body (232), is provided with a head (233) having the output opening (231), wherein the main body (232) comprises an expansion space (260) for accommodating the liquid material, wherein the first conditioner (220) is arranged for heating the nozzle (230) independently of the barrel (250), for maintaining the liquid material in a liquid state.

2. The system (100) according to claim 1, wherein the volume of the expansion space (260) is adjustable.

3. The system (100) according to claim 1 or 2, wherein a wall of the expansion space (260) is provided with at least one slidable wall section for adjusting the volume of the expansion space (260).

4. The system (100) according to claim 3, wherein the at least one slidable wall section comprises a bimetal.

5. The system (100) according to any one of the claims 2-4, wherein the at least one plasticizer (200) comprises a controller for controlling the adjustment of the volume of the expansion space (260), wherein the controller comprises at least one pressure sensor in at least one of the barrel (250), the expansion space (260) and the head (233) of the nozzle (230) for measuring the pressure in the liquid material, and wherein the controller is configured to adjust the volume of the expansion space (260), based on the pressure measured by the at least one pressure sensor, in such a way that a predetermined pressure in the liquid material is established at the output opening (231) of the nozzle (230).

6. The system (100) according to any one of the claims 1-5, wherein the expansion space (260) extends through the main body (232) of the nozzle (230) along the vertical direction (V) as a conduit for the liquid material from a passage duct (255) for the liquid material from the barrel (250) to an output duct (235) for the liquid material in the head (233) of the nozzle (230), wherein the expansion space (260) has a larger diameter (d3) than the passage duct (255) and the output duct (235).

7. The system (100) according to any one of the claims 1-6, wherein the first conditioner (220) is arranged for heating the main body (232) and the head (233) of the nozzle (230) independently of each other.

8. The system (100) according to any one of the claims 1-7, wherein the feeder (210) is arranged for feeding a plastic, preferably a thermoplastic material, as the material.

9. The system (100) according to any one of the claims 1-8, wherein the conveyor (240) is also arranged for transporting the fed material and the liquid material through the at least one plasticizer (200) from the nozzle (230) to the feeder (210).

10. The system (100) according to any one of the claims 1-9, wherein the nozzle (230) is provided with a closing element for opening and closing the output opening (231).

11. The system (100) according to any one of the claims 1-10, wherein the conveyor (240) comprises at least one screw (241) for transporting the fed material and the liquid material through the barrel (250), and wherein the at least one screw (241) comprises a central shaft (243) that is provided with protruding elements (244), such as for example a thread (244).

12. The system (100) according to claim 11, wherein the at least one screw (241) is divided into a plurality of screw zones (245, 246, 247), wherein each screw zone (245, 246, 247) is adapted for a different phase in the process of transporting and liquefying the fed material.

13. The system (100) according to any one of the claims 1-12, wherein the first support device (400) is arranged for simultaneously moving the printing bed (300) according to at least 3 degrees of freedom.

14. The system (100) according to any one of the claims 1-13, wherein the first support device (400) comprises a robotic arm (410) for supporting and moving the printing bed (300).

15. Use of the system (100) according to any one of the claims 1-14 for additive manufacturing of an object.

## Patentansprüche

1. Ein System (100) zur generativen Fertigung eines Gegenstands, wobei das System (100) Folgendes umfasst:
zumindest eine Plastifiziervorrichtung (200), wobei die zumindest eine Plastifiziervorrichtung (200) eine Zuführung (210) zum Zuführen eines Materials zur generativen Fertigung des Gegenstands umfasst, einen ersten Aufbereiter (220), zumindest angeordnet zum Erwärmen der zumindest einen Plastifiziervorrichtung (200) zum Verflüssigen des zugeführten Materials auf eine Weise, um die generative Fertigung des Gegenstands unter Verwendung des flüssigen Materials zu ermöglichen, eine Düse (230) mit einer Ausgabeöffnung (231) zum Ausgeben des flüssigen Materials in einem kontinuierlichen Strom, und ein Förderer (240) zum Transportieren des zugeführten Materials und des flüssigen Materials durch die zumindest eine Plastifiziervorrichtung (200) von der Zuführung (210) zur Düse (230), wobei das System (100) so konfiguriert ist, dass sich die Ausgabeöffnung (231) der Düse (230), zumindest während der generativen Fertigung des Gegenstands, an einer voreingestellten festen Position im System (100) befindet;
ein Druckbett (300), angeordnet zum Auftragen des flüssigen Materials von der zumindest einen Plastifiziervorrichtung (200) darauf für die generative Fertigung des Gegenstands; und
eine erste Stützvorrichtung (400) zum Unterstützen des Druckbetts (300) und zum Bewegen des Druckbetts (300) nach sechs Freiheitsgraden,
wobei die zumindest eine Plastifiziervorrichtung (200) einen Zylinder (250) zum Verflüssigen des zugeführten Materials darin umfasst, wobei der Zylinder (250) mit der Zuführung (210) verbunden ist, wobei der erste Aufbereiter (220) angeordnet ist, um den Zylinder (250) zum Verflüssigen des zugeführten Materials zu erwärmen, wobei sich der Zylinder (250) entlang einer horizontalen Richtung (H) erstreckt, wobei der Förderer (240) angeordnet ist, um das zugeführte Material und das flüssige Material durch den Zylinder (250) entlang der horizontalen Richtung (H) zu transportieren, wobei die Düse (230) einen Hauptkörper (232) umfasst, der mit dem Zylinder (250) verbunden ist und der sich nach unten entlang einer vertikalen Richtung (V) erstreckt, wobei die Düse (230), an einem unteren Ende des Hauptkörpers (232), mit einem Kopf (233) mit der Ausgabeöffnung (231) versehen ist, wobei der Hauptkörper (232) einen Ausdehnungsraum (260) zum Unterbringen des flüssigen Materials umfasst, wobei der erste Aufbereiter (220) angeordnet ist, um die Düse (230) unabhängig vom Zylinder (250) zu erwärmen, um das flüssige Material in einem flüssigen Zustand zu halten.

2. Das System (100) nach Anspruch 1, wobei das Volumen des Ausdehnungsraums (260) verstellbar ist.

3. Das System (100) nach Anspruch 1 oder 2, wobei eine Wand des Ausdehnungsraums (260) mit zumindest einem verschiebbaren Wandabschnitt versehen ist, um das Volumen des Ausdehnungsraums (260) zu verstellen.

4. Das System (100) nach Anspruch 3, wobei der zumindest eine verschiebbare Wandabschnitt ein Bimetall umfasst.

5. Das System (100) nach irgendeinem der Ansprüche 2 bis 4, wobei die zumindest eine Plastifiziervorrichtung (200) einen Regler zum Regeln der Verstellung des Volumens des Ausdehnungsraums (260) umfasst, wobei der Regler mindestens einen Drucksensor in zumindest einem der der Elemente Zylinder (250), Ausdehnungsraum (260) und Kopf (233) der Düse (230) umfasst, um den Druck im flüssigen Material zu messen, und wobei der Regler konfiguriert ist, um das Volumen des Ausdehnungsraums (260) basierend auf dem durch den mindestens einen Drucksensor gemessenen Druck so zu verstellen, dass an der Ausgangsöffnung (231) der Düse (230) ein voreingestellter Druck im flüssigen Material aufgebaut wird.

6. Das System (100) nach irgendeinem der Ansprüche 1 bis 5, wobei sich der Ausdehnungsraum (260) durch den Hauptkörper (232) der Düse (230) entlang der vertikalen Richtung (V) als eine Leitung für das flüssige Material von einem Durchgangskanal (255) für das flüssige Material vom Zylinder (250) zu einem Ausgabekanal (235) für das flüssige Material im Kopf (233) der Düse (230) erstreckt, wobei der Ausdehnungsraum (260) einen größeren Durchmesser (d3) als der Durchgangskanal (255) und der Ausgabekanal (235) hat.

7. Das System (100) nach irgendeinem der Ansprüche 1 bis 6, wobei der erste Aufbereiter (220) angeordnet ist, um den Hauptkörper (232) und den Kopf (233) der Düse (230) unabhängig voneinander zu erwärmen.

8. Das System (100) nach irgendeinem der Ansprüche 1 bis 7, wobei die Zuführung (210) angeordnet ist, um einen Kunststoff, bevorzugt ein thermoplastisches Material, als das Material zuzuführen.

9. Das System (100) nach irgendeinem der Ansprüche 1 bis 8, wobei der Förderer (240) auch angeordnet ist, um das zugeführte Material und das flüssige Material durch die zumindest eine Plastifiziervorrichtung (200) von der Düse (230) zur Zuführung (210) zu transportieren.

10. Das System (100) nach irgendeinem der Ansprüche 1 bis 9, wobei die Düse (230) mit einem Verschlusselement zum Öffnen und Schließen der Ausgabeöffnung (231) versehen ist.

11. Das System (100) nach irgendeinem der Ansprüche 1 bis 10, wobei der Förderer (240) mindestens eine Schnecke (241) zum Transportieren des zugeführten Materials und des flüssigen Materials durch den Zylinder (250) umfasst, und wobei die mindestens eine Schnecke (241) eine zentrale Welle (243) umfasst, die mit überstehenden Elementen (244), wie zum Beispiel einem Gewinde (244) versehen ist.

12. Das System (100) nach Anspruch 11, wobei die mindestens eine Schnecke (241) in eine Vielzahl von Schneckenzonen (245, 246, 247) eingeteilt ist, wobei jede Schneckenzone (245, 246, 247) für eine andere Phase im Verfahren des Transports und der Verflüssigung des zugeführten Materials angepasst ist.

13. Das System (100) nach irgendeinem der Ansprüche 1 bis 12, wobei die erste Stützvorrichtung (400) angeordnet ist, um das Druckbett (300) gleichzeitig nach mindestens drei Freiheitsgraden zu bewegen.

14. Das System (100) nach irgendeinem der Ansprüche 1 bis 13, wobei die erste Stützvorrichtung (400) einen Roboterarm (410) umfasst, um das Druckbett (300) zu stützen und zu bewegen.

15. Verwendung des Systems (100) nach irgendeinem der Ansprüche 1 bis 14 zur generativen Fertigung eines Gegenstands.

## Revendications

1. Un système (100) de fabrication additive d'un objet, dans lequel le système (100) comprend :
au moins un plastifiant (200), dans lequel le au moins un plastifiant (200) comprend un distributeur (210) pour distribuer un matériau pour la fabrication additive de l'objet, un premier conditionneur (220) au moins agencé pour chauffer le au moins un plastifiant (200) pour liquéfier le matériau distribué de manière à permettre la fabrication additive de l'objet en utilisant le matériau liquide, une buse (230) présentant une ouverture de sortie (231) pour délivrer le matériau liquide dans un écoulement continu, et un transporteur (240) pour transporter le matériau distribué et le matériau liquide à travers le au moins un plastifiant (200) depuis le distributeur (210) jusqu'à la buse (230), dans lequel le système (100) est configuré de telle manière que l'ouverture de sortie (231) de la buse (230), au moins au cours de la fabrication additive de l'objet, est située dans une position fixe prédéterminée dans le système (100) ;
un lit d'impression (300) agencé pour appliquer le matériau liquide depuis le au moins un plastifiant (200) sur celui-ci pour la fabrication additive de l'objet ; et
un premier dispositif de support (400) pour supporter le lit d'impression (300) et déplacer le lit d'impression (300) selon 6 degrés de liberté,
dans lequel le au moins un plastifiant (200) comprend un cylindre (250) pour liquéfier le matériau distribué à l'intérieur de celui-ci, dans lequel le cylindre (250) est relié au distributeur (210), dans lequel le premier conditionneur (220) est agencé pour chauffer le cylindre (250) pour liquéfier le matériau distribué, dans lequel le cylindre (250) s'étend dans une direction horizontale (H), dans lequel le transporteur (240) est agencé pour transporter le matériau distribué et le matériau liquide à travers le cylindre (250) dans la direction horizontale (H), dans lequel la buse (230) comprend un corps principal (232) qui est relié au cylindre (250) et qui s'étend vers le bas dans une direction verticale (V), dans lequel la buse (230), à une extrémité inférieure du corps principal (232), est pourvue d'une tête (233) présentant l'ouverture de sortie (231), dans lequel le corps principal (232) comprend un espace d'expansion (260) pour loger le matériau liquide, dans lequel le premier conditionneur (220) est agencé pour chauffer la buse (230) indépendamment du cylindre (250), pour maintenir le matériau liquide dans un état liquide.

2. Le système (100) selon la revendication 1, dans lequel le volume de l'espace d'expansion (260) est ajustable.

3. Le système (100) selon la revendication 1 ou 2, dans lequel une paroi de l'espace d'expansion (260) est pourvue d'au moins une section de paroi coulissante pour ajuster le volume de l'espace d'expansion (260).

4. Le système (100) selon la revendication 3, dans lequel la au moins une section de paroi coulissante comprend un bimétal.

5. Le système (100) selon l'une quelconque des revendications 2 à 4, dans lequel la au moins un plastifiant (200) comprend un dispositif de commande pour commander l'ajustement du volume de l'espace d'expansion (260), dans lequel le dispositif de commande comprend au moins un capteur de pression dans au moins l'un parmi le cylindre (250), l'espace d'expansion (260) et la tête (233) de la buse (230) pour mesurer la pression dans le matériau liquide, et dans lequel le dispositif de commande est configuré pour ajuster le volume de l'espace d'expansion (260), sur la base de la pression mesurée par le au moins un capteur de pression, de telle manière qu'une pression prédéterminée dans le matériau liquide soit établie à l'ouverture de sortie (231) de la buse (230).

6. Le système (100) selon l'une quelconque des revendications 1-5, dans lequel l'espace d'expansion (260) s'étend à travers le corps principal (232) de la buse (230) dans la direction verticale (V) en tant qu'une conduite pour le matériau liquide depuis un conduit de passage (255) pour le matériau liquide depuis le cylindre (250) jusqu'à un conduit de sortie (235) pour le matériau liquide dans la tête (233) de la buse (230), dans lequel l'espace d'expansion (260) présente un diamètre (d3) plus grand que celui du conduit de passage (255) et du conduit de sortie (235).

7. Le système (100) selon l'une quelconque des revendications 1-6, dans lequel le premier conditionneur (220) est agencé pour chauffer le corps principal (232) et la tête (233) de la buse (230) indépendamment l'un de l'autre.

8. Le système (100) selon l'une quelconque des revendications 1-7, dans lequel le distributeur (210) est agencé pour distribuer un plastique, de préférence un matériau thermoplastique, en tant que matériau.

9. Le système (100) selon l'une quelconque des revendications 1-8, dans lequel le transporteur (240) est également agencé pour transporter le matériau distribué et le matériau liquide à travers le au moins un plastifiant (200) depuis la buse (230) jusqu'au distributeur (210).

10. Le système (100) selon l'une quelconque des revendications 1-9, dans lequel la buse (230) est pourvue d'un élément de fermeture pour ouvrir et fermer l'ouverture de sortie (231).

11. Le système (100) selon l'une quelconque des revendications 1-10, dans lequel le transporteur (240) comprend au moins une vis (241) pour transporter le matériau distribué et le matériau liquide à travers le cylindre (250), et dans lequel la au moins une vis (241) comprend un arbre central (243) qui est pourvu d'éléments saillants (244), comme par exemple un filetage (244).

12. Le système (100) selon la revendication 11, dans lequel la au moins une vis (241) est divisée en une pluralité de zones de vis (245, 246, 247), dans lequel chaque zone de vis (245, 246, 247) est adaptée à une phase différente dans le processus de transport et de liquéfaction du matériau distribué.

13. Le système (100) selon l'une quelconque des revendications 1-12, dans lequel le premier dispositif de support (400) est agencé pour déplacer simultanément le lit d'impression (300) selon au moins 3 degrés de liberté.

14. Le système (100) selon l'une quelconque des revendications 1-13, dans lequel le premier dispositif de support (400) comprend un bras robotique (410) pour supporter et déplacer le lit d'impression (300).

15. Utilisation du système (100) selon l'une quelconque des revendications 1-14 pour la fabrication additive d'un objet.
